(19) Europäisches Patentamt

European Patent Office

Office européen des brevets

(11) Veröffentlichungsnummer: **0 455 993 B1**

(12) **EUROPÄISCHE PATENTSCHRIFT**

(45) Veröffentlichungstag der Patentschrift: **14.06.95**

(21) Anmeldenummer: **91105556.4**

(22) Anmeldetag: **08.04.91**

(51) Int. Cl.⁶: **B60G 17/01**, B60G 23/00

(54) **Verfahren und Einrichtung zum Ermitteln und/oder Überwachen des Zustands einer technischen Komponente eines Kraftfahrzeugs.**

(30) Priorität: **09.05.90 DE 4014876**

(43) Veröffentlichungstag der Anmeldung:
**13.11.91 Patentblatt 91/46**

(45) Bekanntmachung des Hinweises auf die
Patenterteilung:
**14.06.95 Patentblatt 95/24**

(84) Benannte Vertragsstaaten:
**DE ES FR GB IT SE**

(56) Entgegenhaltungen:
**WO-A-88/03878**
**WO-A-88/08593**
**DE-A- 2 905 931**
**DE-A- 3 642 590**
**US-A- 4 574 267**

(73) Patentinhaber: **Bayerische Motoren Werke Aktiengesellschaft**
**Patentabteilung AJ-3**
**D-80788 München (DE)**

(72) Erfinder: **Hoppstock, Reiner, Dr.-Ing.**
**Am Stiftsbogen 59**
**W-8000 München 70 (DE)**
Erfinder: **Schindler, Volker, Dr.**
**Max-Halbe-Strasse 14**
**W-8044 Unterschleissheim (DE)**
Erfinder: **Appel, Ulrich, Prof. Dr. Ing.**
**Kiem-Pauli-Weg 8**
**W-8014 Neubiberg (DE)**
Erfinder: **Hohnheiser, Franz**
**Tutzinger Strasse 2**
**W-8000 München 70 (DE)**

(74) Vertreter: **Dirscherl, Josef**
**c/o Bayerische Motoren Werke Aktiengesellschaft**
**Patentabteilung AJ-34**
**D-80788 München (DE)**

**Beschreibung**

Die Erfindung betrifft ein Verfahren und eine Einrichtung zum Ermitteln und/oder Überwachen des Zustands mindestens einer technischen Komponente eines Kraftfahrzeuges, insbesondere eines Rades hinsichtlich einer Radunwucht, eines Luftreifens hinsichtlich seines Fülldruckes und/oder eines Stoßdämpfers hinsichtlich seiner Dämpfungseigenschaften, bei dem die gemäß einer insbesondere durch Fahrbahnunebenheiten erzeugten Schwingungsanregungsfunktion angeregten Schwingungen eines mit der technischen Komponente gekoppelten ersten Bauteils, insbesondere einer ersten Radaufhängung gemessen werden.

Aus der DE-OS 36 42 590 ist ein Verfahren zum Ermitteln von Betriebszuständen eines Kraftfahrzeugs bekannt, bei dem z. B. mittels eines Drucksensors der Druck einer Feder fortlaufend gemessen wird. Aus den über ein größeres Zeitintervall gebildeten Meßwerten werden einerseits direkt gemittelte Größen wie die Grundfrequenz, andererseits über Fourieranalyse weitere Parameter, wie der Energieinhalt in einem vorgegebenen Frequenzband erfaßt. Daraus wird ein mehrdimensionales Muster gebildet, um durch Vergleich mit charakteristischen Mustern qualitative Aussagen über den jeweiligen Fahrzustand beim Betrieb des Kraftfahrzeuges zu treffen.

Um aber eine bestimmte technische Komponente, wie z. B. den Reifendruck während des Fahrbetriebs zu messen, werden in der Regel gesonderte Fühler unmittelbar an der interessierenden technischen Komponente eingesetzt. Beispielsweise wird der Reifendruck mit einem in der Felge eingebauten Druckfühler gemessen, wobei die Energieversorgung des Fühlers wie auch die Signalübertragung des Meßwertes drahtlos, z. B. induktiv erfolgen, was jedoch aufwendig ist.

Stoßdämpfer eines Kraftfahrzeuges können z. B. nach der DE-PS 30 23 295 im eingebauten Zustand dadurch auf ihre Funktion geprüft werden, daß auf einem Prüfstand die betroffene Radaufhängung mit einem Schwingungserreger in geregelte Schwingungen versetzt wird und anhand der Schwingungsgeschwindigkeit auf die Funktionsfähigkeit des Stoßdämpfers rückgeschlossen wird. Derartige Überprüfungen sind daher abhängig von der Kenntnis der Anregungsfunktion der Schwingungen und von der für die Übertragung der eingeleiteten Schwingungen auf die Bauteile, an denen die Messung durchgeführt wird, jeweils maßgeblichen Übertragungsfunktionen und lassen sich nicht während des Fahrbetriebs des Kraftfahrzeuges durchführen.

Aus der gattungsbildenden DE 29 05 931 A1 ist eine Vorrichtung zur Überwachung von Stoßdämpfern sowie des Reifenluftdruckes von Fahrzeugrädern bekannt, bei der ein Beschleunigungssensor an einem tragenden Bauteil jedes zu überwachenden Rades und/oder ein Beschleunigungssensor an einer jedem zu überwachenden Rad naheliegenden Stelle der Fahrzeugkarosserie angeordnet ist. Jedem dieser Beschleunigungssensoren ist wenigstens eine Auswerteschaltung nachgeschaltet. Die Ausgangssignale der Auswerteschaltungen werden laufend mit Sollwerten und/oder miteinander verglichen. Jede Auswerteschaltung besteht dabei vorzugsweise aus einem Frequenzfilter, einem Gleichrichter und einem Integrator mit wählbarer Auswertezeit.

Bei dieser bekannten Vorrichtung wird davon ausgegangen, daß bei einem fahrenden Fahrzeug die Räder und die Karosserie gegenüber der Straßenoberfläche Vertikalbewegungen ausführen, die neben dem Fahrzeuggewicht, der Straßenbeschaffenheit u. a. auch von der Güte der Stoßdämpfer und vom Reifenluftdruck abhängen. Diese Bewegungen, Geschwindigkeiten bzw. Beschleunigungen und deren Frequenz lassen sich durch die Beschleunigungssensoren in Form von elektrischen Signalen erfassen. Die Ausgangssignale der Beschleunigungssensoren lassen dann Schlüsse auf die Größe des Reifenluftdruckes und auf die Beschaffenheit des zugeordneten Stoßdämpfers zu.

Bei dieser bekannten Vorrichtung zur Überwachung von Stoßdämpfern und Reifenluftdruck von Fahrzeugrädern wird der Zusammenhang zwischen dem Reifenluftdruck bzw. der Stoßdämpferbeschaffenheit und der Resonanzfrequenz der gemessenen Schwingungen zur Feststellung von Änderungen des Reifenluftdrucks bzw. des Zustandes der Stoßdämpfer genützt.

Da die Resonanzfrequenz der schwingenden Radaufhängung bzw. der Fahrzeugkarosserie von vielen zusätzlichen Parametern, wie der Radmasse, der Dämpferkennlinie, dem Reifentyp, der Reifencharakteristik, der Fahrzeuggeschwindigkeit, der Radgeschwindigkeit, der Beladung, der Achslast, des Schräglaufwinkels, des Sturzwinkels, der Reifentemperatur, der Außentemperatur sowie der Betriebszeit abhängig ist, kann eine Reifenluftdrucküberwachung bzw. eine Stoßdämpferüberwachung mit der bekannten Vorrichtung bestenfalls qualitativ erfolgen. Das heißt, mit einer derartigen Vorrichtung kann allenfalls ein beinahe "platter" Reifen bzw. ein vollständig defekter Stoßdämpfer detektiert werden.

Aus der US 4,574,267 ist ferner eine Vorrichtung zur Überwachung des Reifenluftdrucks von Fahrzeugrädern bekannt, bei der ebenso wie bei der aus der DE 29 05 931 A1 bekannten Vorrichtung der Reifenluftdruck überwacht wird, indem Veränderungen der Federkonstante der Fahrzeugreifen überwacht werden. Auch bei dieser bekannten Vorrichtung sind Beschleunigungssensoren an den Radaufhängungen in der Nähe der Fahrzeugreifen befestigt. Diese Beschleunigungssensoren messen wiederum die vertikalen Beschleunigungen der Radaufhängungen. Das jeweilige Frequenzspektrum der erhaltenen Beschleunigungssignale enthält jeweils eine ausgeprägte Resonanzfrequenz, die von der Federkonstante des Reifens und somit vom Reifenluftdruck abhängig ist. Diese Beschleunigungssignale werden in der Weise analysiert, daß Abweichungen der gemessenen Resonanzfrequenz von der Resonanzfrequenz bei richtig eingestelltem Reifenluftdruck festgestellt werden. Aufgrund dieser Abweichungen der gemessenen Resonanzfrequenz von der sog. Normresonanzfrequenz wird dann auf eine Veränderung des Reifenluftdrucks geschlossen.

Wie bereits vorstehend bei der Würdigung der DE 29 05 931 A1 ausgeführt, ist diese Art der Reifenluftdrucküberwachung jedoch sehr ungenau, da die Resonanzfrequenz von einer Vielzahl zusätzlicher Parameter abhängig ist und damit eine Veränderung der Resonanzfrequenz nicht nur durch eine Veränderung des Reifenluftdrucks sondern auch durch eine Veränderung der übrigen, die Resonanzfrequenz bestimmenden Parameter hervorgerufen sein kann.

Diese Abhängigkeiten machen eine exakte Luftdrucküberwachung praktisch unmöglich und schränken diese allenfalls auf die Erkennung eines beinahe "platten" Reifens ein.

Es ist daher Aufgabe der Erfindung, ein Verfahren und eine Einrichtung eingangs genannter Art anzugeben, mit welchem die Ermittlung und/oder Überwachung des Zustandes mindestens einer technischen Komponente eines Kraftfahrzeuges, beispielsweise eines Luftreifens hinsichtlich seines Fülldruckes oder eines Stoßdämpfers hinsichtlich seiner Dämpfungseigenschaften ohne Kenntnis der jeweiligen Anregungsfunktion der gemessenen Schwingungen eines mit der technischen Komponente gekoppelten Bauteils auch quantitativ sehr genau möglich ist.

Diese Aufgabe wird beim erfindungsgemäßen Verfahren dadurch gelöst, daß die Schwingungen mindestens eines zweiten mit der technischen Komponente gekoppelten Bauteils, insbesondere einer zweiten Radaufhängung gemessen werden, das lediglich unter Berücksichtigung eines etwaigen Funktionszusammenhangs insbesondere einer Zeitverzögerung mit zumindest nahezu derselben Schwingungsanregungsfunktion wie das erste Bauteil angeregt wird, daß aus den am ersten Bauteil abgegriffenen Meßwerten eine erste Meßwertfunktion und aus den am zweiten Bauteil abgegriffenen Meßwerten eine zweite Meßwertfunktion gebildet wird, daß die beiden Meßwertfunktionen in den Spektralbereich transformiert werden, daß die die Kopplung zwischen dem ersten und dem zweiten Bauteil wiedergebenden spektralen Kennwerte in Form der Übertragungsfunktion durch Bildung des Quotienten der beiden in den Spektralbereich transformierten Meßwertfunktionen bestimmt werden, daß die spektralen Kennwerte in Form der Übertragungsfunktion mit zugeordneten spektralen (Norm-)Kennwerten zur Bestimmung von Abweichungen in dem für die jeweilige technische Komponente charakteristischen Frequenzbereich verglichen werden und daß der Zustand der jeweiligen technischen Komponente entsprechend dieser Abweichungen ermittelt wird.

Vorteilhafte Ausgestaltungen des erfindungsgemäßen Verfahrens sind in den Unteransprüchen 2 bis 9 beschrieben.

Der Patentanspruch 10 enthält vorteilhafte Anwendungsbeispiele des erfindungsgemäßen Verfahrens.

Im Patentanspruch 11 ist eine vorteilhafte Einrichtung zur Durchführung des erfindungsgemäßen Verfahrens beschrieben.

Nach dem erfindungsgemäßen Verfahren werden die aktuellen spektralen Kennwerte mit zugeordneten spektralen Erfahrungskennwerten, beispielsweise aufgrund zeitlich vorangegangener Messungen verglichen. In Kenntnis der durch Versuche bestimmbaren, für die jeweilige technische Komponente, die mit den Radaufhängungen des Fahrzeuges schwingungsmäßig gekoppelt ist, charakteristischen Frequenzen und/oder Frequenzbereiche der Kennkurve lassen sich somit Abweichungen im Zustand der technischen Komponente von einem bekannten Zustand nicht nur feststellen, sondern auch quantitativ bestimmen. Zur Auswertung des erfindungsgemäßen Verfahrens ist es jedoch nicht erforderlich, bei jedem Meßvorgang die gesamte Kennkurve zu generieren. Vielmehr ist es auch möglich, im jeweiligen aktuellen Fall nicht interessierende Frequenzen auszufiltern und daher für die Auswertung auf Einzelkennwerte bei der jeweiligen intereressierenden Frequenz oder im jeweiligen interessierenden Frequenzbereich zurückzugreifen.

Jedes der zur Messung herangezogenen Bauteile der Radaufhängungen ist mit der interessierenden technischen Komponente, z.B. dem zugeordneten Reifen, gekoppelt. Die Schwingungs-Anregungsfunktion an dieser technischen Komponente ist über eine aus der Art der Kopplung bestimmte Übertragungsfunktion mit der aus den Meßwerten, die an dem jeweiligen Bauteil abgegriffen werden, gebildeten Meßwertfunktion verknüpft, wobei diese Übertragungsfunktion sämtliche Zustandsinformationen über die jeweils zugeordnete technische Komponente enthält. Andererseits sind die Bauteile unterschiedlicher Radaufhängungen über Karosserie und Fahrbahn auch miteinander gekoppelt, so daß die schwingungsmäßigen Verknüpfungen der erhaltenen Meßwertfunktionen mit der jeweiligen Anregungsfunktion rechnerisch derart miteinander kombiniert werden können, daß die Anregungsfunktionen rechnerisch herausfallen und über ihre Übertragungsfunktionen eine Hilfsübertragungsfunktion definiert wird, die dann ebenfalls sämtliche Zustandsinformationen über die technischen Komponenten, im Beispiel die beiden Reifen der betrachteten beiden Radaufhängungen, enthält. Hierbei können die Anregungsfunktionen in erster Näherung gleichgesetzt werden oder es kann eine vorbestimmte Zeitverzögerung zwischen ihnen berücksichtigt werden.

Das was vorstehend am Beispiel der Übertragungsfunktionen ausgeführt wurde, läßt sich entsprechend auch auf andere Verknüpfungen, die angewendet werden können, z.B. auf Korrelationen übertragen.

Die Erfindung baut darauf auf, daß aus Schwingungsmessungen an z.B. zwei unterschiedlichen Radaufhängungen insbesondere durch Transformation der ggf. umgerechneten Meßwerte der Schwingungen von mit der interessierenden technischen Komponente gekoppelten Bauteilen in einen Spektralraum und durch eine rechnerische derartige Kombination der transformierten Meßwerte, daß die jeweiligen Anregungsfunktionen rechnerisch herausfallen, fahrzeugspezifisch frequenzabhängige Kennkurven erhalten werden können, in welchen die Amplituden der Meßgröße in einem für die interessierende technische Komponente spezifischen begrenzten Frequenzbereich von deren Zustand abhängig sind, in anderen Frequenzbereichen dieser Kennkurven jedoch nicht. Dies eröffnet die Möglichkeit, in dem gleichen Meßvorgang den Zustand auch mehrerer technischer Komponenten aufgrund der Abweichungen der Kennkurve in unterschiedlichen, für die jeweilige technische Komponente charakteristischen Frequenzbereichen wenigstens qualitativ, jedoch auch quantitativ zu ermitteln. Beispielsweise hat sich gezeigt, daß der für den Zustand der Stoßdämpfer charakteristische Frequenzbereich deutlich unter dem für den Reifendruck charakteristischen Frequenzbereich liegt und diese Frequenzbereiche unabhängig von der jeweiligen Fahrgeschwindigkeit sind. Eine Radunwucht hingegen äußert sich in verschiedenen charakteristischen schmalbandigen Extremwerten der Kennkurve, deren Lage fahrgeschwindigkeitsabhängig ist, so daß zur Bestimmung der Radunwucht zusätzlich die jeweilige Fahrgeschwindigkeit zu berücksichtigen ist.

Bei dem erfindungsgemäßen Verfahren kommt es somit nicht darauf an, ob die Schwingungsanregung gezielt mit deterministischer Anregungsfunktion, deren Verlauf bekannt ist, oder stochastisch erfolgt, da das Verfahren auch ohne Kenntnis der Anregungsfunktion durchgeführt werden kann. Hierdurch ist das erfindungsgemäße Verfahren unabhängig von hinsichtlich der Schwingungsform vorbestimmten Meßbedingungen und kann daher sowohl auf einem Prüfstand bei stochastischer oder nichtstochastischer Schwingungsanregung als auch im stochastischen Fahrbetrieb des Kraftfahrzeugs durchgeführt werden.

Die Erfindung macht von einer Multisensorsignalverarbeitung Gebrauch, wobei auf bereits am Kraftfahrzeug vorhandene oder zusätzlich eingebaute Meßfühler zurückgegriffen wird. Die Messungen können während des normalen Fahrbetriebs, aber auch an einem Prüfstand durchgeführt werden, wobei es aber im letzteren Fall erfindungsgemäß nicht auf bestimmte Anregungsfunktionen ankommt. Es ist im letzteren Fall auch möglich, die Meßfühler erst am Prüfstand an den betreffenden Radaufhängungen anzubringen. Für beide Fälle gilt, daß mindestens zwei Meßfühler an unterschiedlichen Radaufhängungen erforderlich sind, daß jedoch bei multisensorieller Verarbeitung der Signale von mehr als zwei Meßfühlern ggf. deutlichere und genauere Ergebnisse erzielt werden können.

Bevorzugt werden gegenwärtig Messungen an einer oder beiden vorderen und einer oder beiden hinteren Radaufhängungen, wenngleich auch unterschiedliche Radaufhängungen an unterschiedlichen Fahrzeugseiten für die Messungen infrage kommen können. Bei Messungen an beiden Fahrzeugseiten oder Messungen an den vorderen oder den hinteren Radaufhängungen kann das erfindungsgemäße Verfahren für die beiden Fahrzeugseiten bzw. die vorderen und die hinteren Radaufhängungen jeweils gesondert oder aber auch gemeinsam durchgeführt werden.

Mit dem erfindungsgemäßen Verfahren werden die Meßwerte, die an den unterschiedlichen Radaufhängungen gewonnen werden, aufgrund von in die Räder dieser Radaufhängungen eingeleiteten Schwingungen miteinander verknüpft, so daß im Ergebnis eine Aussage über den Gesamtzustand mehrerer überprüfter technischer Komponenten, z.B. zweier Reifen oder Stoßdämpfer einer Fahrzeugseite erhalten wird. Um Aussagen über den Zustand einzelner Baugruppen zu ermöglichen, können weitere Sensoren, z.B. am oberen Federbeindomende, angebracht und deren Meßsignale zusätzlich im Sinne der Erfindung ausgewertet werden.

Jedoch ist es in Weiterbildung des erfindungsgemäßen Verfahrens auch möglich, die Zustandsänderung eines Einzelgliedes der technischen Komponente, z.B. den Luftdruck eines bestimmten Reifens, zu erkennen und ggf. auch quantitativ zu ermitteln, wenn zusätzlich eine Modellidentifikation mittels der an der jeweils zugeordneten Radaufhängung gewonnenen Einzelmeßwerte durchgeführt wird. Dies ist beispielsweise über das sogenannte AR(autoregressive)-Signalmodell möglich, mit welchem über eine Linearkombination von Meßwerten aus der Vergangenheit ein zukünftig auftretender Meßwert ohne Kenntnis des Eingangssignals vorhergesagt wird. Durch Vergleichen des tatsächlichen Meßwertes mit dem vorhergesagten Meßwert oder durch laufende Überwachung (Trendanalyse) der Modellparameter kann dann unter Benutzung des Ergebnisses der multisensoriellen Signalverarbeitung auf das Vorhandensein und auch die Größe

EP 0 455 993 B1

der Abweichung des Zustands des Einzelgliedes von demjenigen der anderen Einzelglieder der technischen Komponente gefolgert werden.

Der zu überwachende Zustandsparameter der technischen Komponente, z.B. der Druck in einem Reifen, wird erfindungsgemäß nicht selbst gemessen. Vielmehr kann von einer leichter zugänglichen Meßgröße ausgegangen werden, z.B. der Vertikalbeschleunigung an der Radachse und/oder dem Weg oder der Geschwindigkeit z.B. der Radachse gegenüber der Karosserie, die mittels entsprechender Sensoren erfaßt werden können. Allgemein gilt, daß die Signale wenigstens zweier Fühler an unterschiedlichen Radaufhängungen vorliegen. Jedoch wird es bei Benutzung von mehr als zwei Fühlern einfacher, insbesondere mehrere technische Komponenten zu überwachen. Beispielsweise ist es günstig, zur Zustandsermittlung der Stoßdämpfer zusätzliche Fühler z.B. am Federbeindomende mitzubenützen.

Mit dem erfindungsgemäßen Verfahren können prinzipiell alle technischen Komponenten des Kraftfahrzeugs, die von einer Anregungsquelle angeregt werden und mit den Radaufhängungen schwingungsmäßig gekoppelt sind, überprüft werden, wobei es auf die Art der Anregungsquelle nicht ankommt, da eine Kenntnis der Anregungsfunktionen nicht erforderlich ist. Außer der Überprüfung von Reiten hinsichtlich des Reifendruckes, von Stoßdämpfern hinsichtlich vorhandener Defekte und von Rädern hinsichtlich vorhandener Reifenunwuchten lassen sich daher z.B. auch andere Fahrwerkskomponenten sowie Lenkungskomponenten und bestimmte Komponenten am Motor und Getriebe erfindungsgemäß überprüfen.

Bei der erfindungsgemäßen Signalverarbeitung handelt es sich insbesondere um eine digitale Signalverarbeitung. Die erfindungsgemäße Einrichtung weist außer den Meßfühlern eine Datenverarbeitungseinrichtung mit einem die Signalverarbeitung nach vorbestimmten Algorithmen durchführenden Rechner, einen Speicher für in früheren Zeitpunkten gewonnene Meßwerte und Rechenergebnisse sowie eine ggf. adaptive Komparatoreinrichtung, die auch durch den Rechner verwirklicht sein kann, zum Vergleichen der aktuellen und der früheren Meßwerte bzw. Rechenergebnisse auf. Es können entsprechende Warn- und/oder Anzeigemittel zum Übermitteln der gewonnenen Information an den Fahrzeugfahrer bzw. an den Prüfer bei der Überprüfung dem Kraftfahrzeugs auf dem Prüfstand angeschlossen sein. Zusätzlich oder alternativ ist es auch möglich, die gewonnenen Informationen in einem auslesbaren Speicher festzuhalten, damit sie z.B. bei einer Werkstattdiagnose verwendet werden können.

Die Erfindung wird anhand eines beispielgebenden Modells und der Zeichnung erläutert. Es zeigen:

Fig. 1 den prinzipiellen Aufbau eines Kraftfahrzeuges mit den Meßstellen und den Übertragungsfunktionen, die bei dem Ausführungsbeispiel verwendet werden,

Fig. 2 ein Aufbauschema einer Einrichtung zur Ermittlung der entsprechenden Parameter,

Fig. 3 ein Beispiel einer spektralen Kennkurve für verschiedene  Zustände zweier unterschiedlicher technischer Komponenten und die Auswirkungen dieser Zustände in charakteristischen Frequenzbereichen

Fig. 4 den prinzipiellen Aufbau eines Kraftfahrzeuges mit den Meßstellen und den Übertragungsfunktionen, die bei dem konkreten Ausführungsbeispiel zur Reifenluftdruckbestimmung bzw. -überwachung verwendet werden,

Fig. 5 ein Ersatzschaltbild für das in Fig. 4 gezeigte System und

Fig. 6 den Mittelwert der Übertragungsfunktion im Bereich 15 Hz bis 35 Hz in Abhängigkeit des Reifenluftdrucks für vier Geschwindigkeiten.

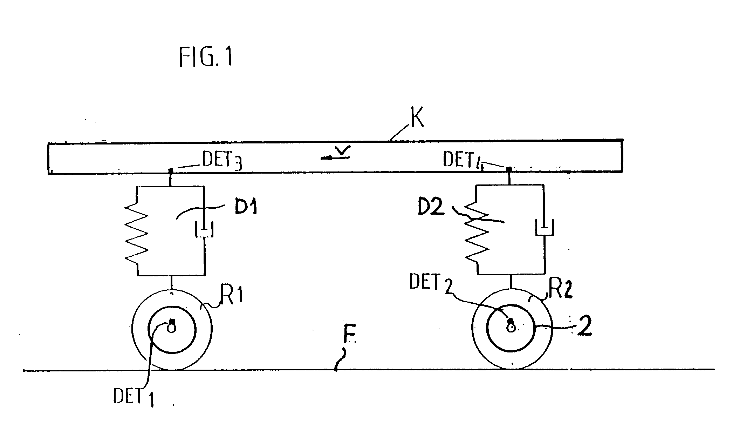

In Fig. 1 ist schematisch ein Kraftfahrzeug mit der Karosserie K dargestellt, die über Stoßdämpfer D1, D2 und Federn auf den Vorderrädern 1 mit den Reifen R1 und auf den Hinterrädern 2 mit den Reifen R2 abgestützt ist. Das Fahrzeug bewegt sich mit der Geschwindigkeit v auf einer Straße F. An den Radachsen der Räder 1 und 2 detektieren die Sensoren DET1 und DET2 z. B. die Vertikalbeschleunigung der Radachsen aufgrund der Schwingungen, die bereits von kleinen Unebenheiten der Straße F ständig, jedoch stochastisch angeregt werden und die über die Stoßdämpfer D1, D2 und die Federn auch auf die Karosserie K übertragen werden. Am oberen Federbein-Domende des Vorderrad-Stoßdämpfers D1 kann ein entsprechender Sensor DET3 ebenfalls z. B. die Vertikalbeschleunigung der Karosserie messen, während ein weiterer Sensor DET4 z. B. die Vertikalbeschleunigung am oberen Federbein-Domende des Hinterrad-Stoßdämpfers D2 detektieren kann.

Zur Überwachung der Dämpfer, der Radunwucht und des Reifenluftdruckes sind jedoch die Detektoren DET3 und DET4 nicht unbedingt erforderlich. Es können aber auch weitere Sensoren eingesetzt werden, um für die Signalverarbeitung zusätzliche Signale bereitzustellen und weitere Fahrzeugkomponenten, insbesondere Fahrwerkskomponenten, Lenkungskomponenten, den Motor, den Antrieb bzw. das Getriebe oder auch das ganze Lenksystem zu überwachen.

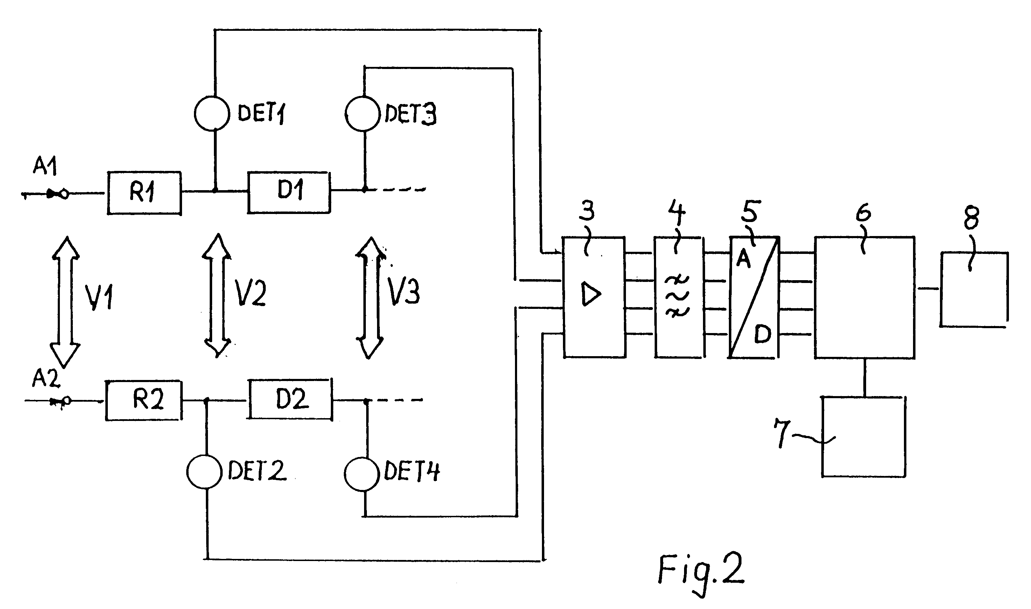

Die verschiedenen Sensorsignale können in einem Vierkanalverfahren simultan, aber darüber hinaus auch selektiv verarbeitet werden. Ein Beispiel einer Einrichtung mit einer entsprechenden Signalverarbeitungseinheit ist in Fig. 2 schematisch dargestellt. In Fig. 2 wird wie in Fig. 1 davon ausgegangen, daß der Zustand der Reifen R1, R2 und der Stoßdämpfer D1, D2 als technische Komponenten mit Hilfe der Sensoren DET1 bis DET4 überprüft werden sollen. Die auf den Hinterreifen R2 wirkende Schwingungsanregung A2 ist entsprechend der Fahrgeschwindigkeit des Fahrzeugs zeitversetzt gegen die auf den Vorderreifen R1 einwirkende Schwingungsanregung A1, was durch die Verkopplung V1 angegeben ist. Mit V2 und V3 sind die Verkopplungen der Sensoren DET1 und DET2 bzw. DET3 und DET4 über die Karosserie angegeben. Die Meßsignale der Sensoren werden über einen Verstärker 3, einen Filter 4 und einen A/D-Wandler 5 in einen Rechner 6 eingelesen, in welchem die weiter oben beschriebene Signalverarbeitung nach einem im Rechner 6 gespeicherten Algorithmus erfolgt. An den Rechner 6 ist ein Speicher 7 angeschlossen, in dem die Meßsignale und die Rechenergebnisse früherer Signalverarbeitungen gespeichert sind. Ferner ist in dem Ausführungsbeispiel nach Fig. 2 an den Rechner ein Display 8 angeschlossen, um einen Meßwert für die jeweiligen Parameterwerte oder ein Warnsignal für das Auftreten eines Defektes anzuzeigen. Es können aber auch andere Mittel vorgesehen sein, um durch Vergleich der im Rechner ermittelten charakteristischen Parameter mit entsprechenden Eichwerten einen geeigneten Eingriff in den Betrieb des Fahrzeuges auszulösen.

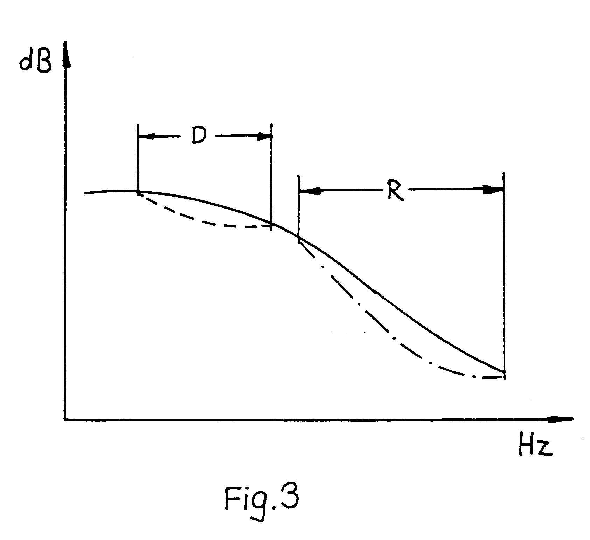

In Fig. 3 ist in Prinzipdarstellung eine fahrzeugspezifische spektrale Kennkurve gezeigt, die durch die multisensorielle Signalverarbeitung erhalten werden kann. Die Kennkurve weist fahrzeuggeschwindigkeitsunabhängig vorbestimmte Frequenzbereiche auf, die für den Zustand jeweils einer der überprüften technischen Komponenten charakteristisch sind. Im dargestellten Ausführungsbeispiel sind dies der Frequenzbereich D, in dem der Kurvenverlauf von dem Zustand der Stoßdämpfer abhängig ist, und der deutlich oberhalb des Frequenzbereiches D ohne dessen Überlappung liegende Frequenzbereich R, dessen Kurvenverlauf von dem Luftdruck der Reifen abhängt. Die gestrichelte Linie für den Frequenzbereich D gibt eine weichere Dämpfercharakteristik an, wohingegen die strichpunktierte Linie für den Frequenzbereich R einen geringeren Reifenluftdruck anzeigt. Hingegen sind Zustandsänderungen der jeweiligen überwachten technischen Komponente außerhalb des jeweiligen, für diese charakteristischen Frequenzbereiches nicht oder nicht wesentlich von Einfluß auf den Verlauf der Kennkurve, so daß deutlich unterscheidbare Auswertekriterien für den Zustand mehrerer unterschiedlicher technischer Komponenten vorliegen, die gleichzeitig über gemeinsame indirekte Messungen überprüft werden können.

Im folgenden werden die einzelnen Verfahrensschritte des erfindungsgemäßen Verfahrens anhand eines Ausführungsbeispieles zur Reifenluftdruckbestimmung bzw. -überachung im Detail beschrieben. Ferner soll gezeigt werden, wie auf analoge Weise der Zustand der Stoßdämpfer eines Fahrzeuges überwacht bzw. evtl. vorhandene Unwuchten in den Rädern festgestellt werden können.

Ein Ziel der Erfindung ist es also, aus den an den Radachsen eines Kraftfahrzeuges gemessenen Vibrationssignalen die Luftdrücke der Reifen und evtl. vorhandene Unwuchten zu messen, sowie den Zustand der Stoßdämpfer zu überprüfen. Es wird ein "indirektes Meßverfahren" vorgestellt, bei dem z. B. bei der Ermittlung des Reifenluftdruckes kein Drucksensor zur Messung erforderlich ist. Aus den an der Radachse und der Karosserie des Fahrzeuges gemessenen Vibrationen können weiterhin auf eine unabhängige Art und Weise die Stoßdämpfer des Fahrzeuges überwacht werden.

Prinzipiell kann jedes technische System durch seine Übertragungsfunktion h(t) beschrieben werden. Typische Systeme sind Elektronikkomponenten wie Hoch-, Tiefpaß, aber auch mechanische Systeme, insbesondere Schwingungsbeanspruchte wie Räder, Reifen und Federn. Wird das System eingangsseitig mit einer zeitabhhängigen Funktion $u_e(t)$ beaufschlagt (angeregt), so erhält man am Ausgang ein zeitabhängiges Signal $u_a(t)$. Der Zusammenhang beider Signale ist durch die Übertragungsfunktion h(t) gegeben.

Mathematisch wird der Zusammenhang zwischen Eingangs- und Ausgangssignal durch ein Faltungsintegral beschrieben:

$$u_a(t) = h(t) * u_e(t) = \int_{-\infty}^{\infty} h(x)\, u_e(t-x)\, dx \qquad (1)$$

Eine äquivalente Beschreibung des Systems kann im Spektralbereich gegeben werden. Der Zusammenhang zwischen Zeit- und Spektralbereich ist allgemein durch eine Integraltransformation (Fourier-, Laplace, Z-Transformation,....) gegeben. Mit Hilfe der Fouriertransformation werden die Zusammenhänge im folgenden dargestellt.

Die Fouriertransformation und deren inverse Transformation sind wie folgt definiert:

$$U_e(\omega) = \frac{1}{\sqrt{2\pi}} \int_{-\infty}^{+\infty} u_e(t)\, e^{-i\omega t} dt \qquad (2a)$$

$$u_e(t) = \frac{1}{\sqrt{2\pi}} \int_{-\infty}^{+\infty} U_e(\omega)\, e^{-i\omega t} d\omega \qquad (2b)$$

Der Zusammenhang zwischen Eingangs- und Ausgangssignal ist im Spektralbereich durch eine einfache Multiplikation gegeben:

$$U_a(\omega) = H(\omega) U_e(\omega) \qquad (3a)$$

Damit ist eine Möglichkeit, die Übertragungsfunktion in der Praxis zu bestimmen, gegeben. Man misst sowohl Eingangs- als auch Ausgangssignal, transformiert beide in den Spektralbereich (Gleichung 2a) und errechnet die Übertragungsfunktion durch einfache Division:

$$H(\omega) = \frac{U_a(\omega)}{U_e(\omega)} \qquad (3b)$$

Durch eine Veränderung an einer technischen Komponente wird die Übertragungsfunktion geändert. Durch Beobachten der Übertragungsfunktion kann mit Hilfe auftretender Änderungen die Komponente überwacht werden. Bei dieser Art der Überwachung wird man insbesondere unabhängig vom Verlauf und der Form der Anregungsfunktion, sofern diese im relevanten Spektralbereich von null verschieden ist.

Alle angegebenen Gleichungen müßten für zeitdiskrete Signale und frequenzdiskrete Spektren angegeben werden. Auf diese Darstellung soll jedoch verzichtet werden, da die zeitkontinuierliche Darstellung meist sehr viel anschaulicher ist.

Im konkreten Anwendungsbeispiel soll der Reifenluftdruck aus den an den Radachsen auftretenden Beschleunigungen, also ohne Verwendung eines Drucksensors, ermittelt werden. Dazu wird je ein Beschleunigungsaufnehmer pro Achse angebracht. Die beispielsweise bei einer Schwellenüberfahrt, aber auch bei stochastischer Schwingungsanregung durch eine normale Fahrbahn auftretenden Beschleunigungen werden an den Radnaben der Vorder- und Hinterachse des Fahrzeuges gemessen.

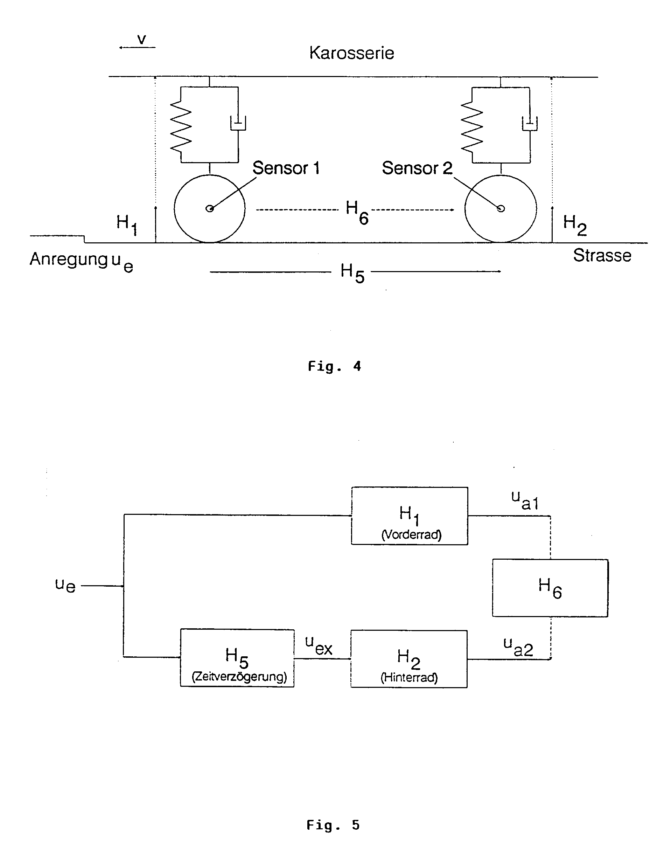

Fig. 4 zeigt schematisch die verwendeten Sensoren und die für die Berechnung des Reifenluftdrucks wichtigen Übertragungsfunktionen.

Ein Ersatzschaltbild für das in Fig. 4 gezeigte System ist in Fig. 5 dargestellt.

$H_1$ repräsentiert die Übertragungsfunktion von der Straße zur vorderen Radachse, an der der Sensor 1 die auftretenden Schwingungssignale mißt. $H_2$ stellt die Übertragungsfunktion von der Straße zur hinteren Radachse dar, wo ebenfalls die Schwingungen gemessen werden. $H_5$ stellt abstrakt die Übertragungsfunktion der Straße dar. Diese repräsentiert die Zeitverzögerung, mit der das Hinterrad dieselbe Stelle der Straße überfährt wie zuvor das Vorderrad. Diese Zeitverzögerung hängt von der Fahrgeschwindigkeit und dem Radstand des Fahrzeuges ab. $H_6$ ist die für die Reifenluftdruckbestimmung relevante Übertragungsfunktion. Diese verbindet formal die Radachse vorn mit der Radachse hinten und ist physikalisch in komplexer und komplizierter Form über die Karosserie realisiert.

Die Übertragungsfunktion $H_6$ zwischen Radachse vorn und Radachse hinten kann aus den beiden Sensorsignalen unter Berücksichtigung der geschwindigkeitsabhängigen Zeitverzögerung zwischen Vorder- und Hinterrad mit Hilfe der Gleichung 3b berechnet werden. Wie daraus der Reifenluftdruck bestimmt wird, wird weiter unten gezeigt.

Wird ein Fahrzeug auf einer beliebigen Straße gefahren, so ist die Anregung des Reifens durch die Oberfläche der Straße nur sehr schwierig meßbar, so daß die Übertragungsfunktion $H_1$ selbst nicht ohne weiteres bestimmt werden kann.

Die vorliegende Erfindung macht es insbesondere möglich, von der unbekannten Anregungsfunktion der Straße unabhängig zu werden. Dazu ist nur noch die Fahrzeuggeschwindigkeit zu messen und die Kenntnis des Radstandes notwendig. Für die gemessenen Signale $U_{a1}$ und $U_{a2}$ gelten im Spektralbereich folgende Beziehungen, was insbesondere dem Ersatzschaltbild von Fig. 5 zu entnehmen ist:

$$U_{a1} = H_1\ U_e$$
$$U_{a2} = H_2\ U_{ex} = H_2\ H_5\ U_e$$

Damit läßt sich die Übertragungsfunktion $H_6$ aus den gemessenen Beschleunigungen an den Radachsen ohne Kenntnis der Anregung ermitteln:

$$H_6 = \frac{U_{a2}}{U_{a1}} = \frac{H_2\ H_5\ U_a}{H_1\ U_a} = \frac{H_2\ H_5}{H_1} \qquad (4)$$

Diese Übertragungsfunktion $H_6$ wird zur Reifenluftdruckbestimmung für einen bestimmten charakteristischen Frequenzbereich von beispielsweise 15 Hz bis 35 Hz vorzugsweise in digitaler Form berechnet. Als Kriterium für den Reifenluftdruck wird dann der Mittelwert des Betrages dieser Übertragungsfunktion $H_6$ in diesem charakteristischen Frequenzbereich bestimmt.

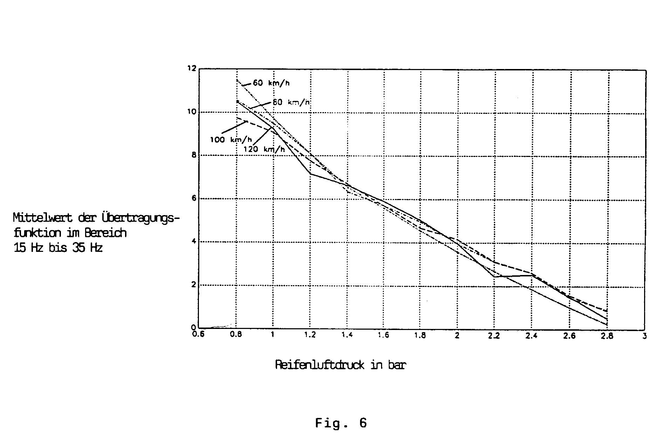

Untersuchungen haben gezeigt, daß der in dem für den Reifenluftdruck charakteristischen Frequenzbereich ermittelte Mittelwert des Betrages der Übertragungsfunktion $H_6$ weitgehend unabhängig von der Fahrzeuggeschwindigkeit nahezu linear vom Reifenluftdruck abhängt. Dieser Zusammenhang ist in Fig. 6 dargestellt. Auf diese Weise kann der Reifenluftdruck indirekt mit einer Genauigkeit von etwa 0,2 bar aus dem Mittelwert des Betrages der Übertragungsfunktion $H_6$ und damit wie vorstehend dargelegt aus den gemessenen Beschleunigungen an den Radnaben der Vorder- und Hinterachse des Fahrzeuges ermittelt werden.

Das erfindungsgemäße Verfahren ist unabhängig von der Art der Anregung, so daß es nicht nur bei definierter Schwingungsanregung, sondern auch bei stochastischer Anregung durch eine normale Straße funktioniert.

Obwohl das vorstehend beschriebene Verfahren prinzipiell auch bei analoger Signalverarbeitung funktioniert, ist dennoch anzumerken, daß die in der Praxis erwünschte Genauigkeit nur bei digitaler Signalverarbeitung zu erreichen ist.

Der Zustand der Stoßdämpfer eines Fahrzeuges kann analog der Reifenluftdruckbestimmung mit Hilfe der vorstehend beschriebenen Übertragungsfunktion $H_6$ überwacht werden. D. h., alle Schritte des Verfahrens laufen identisch ab. Lediglich bei der Auswertung wird der Mittelwert der Übertragungsfunktion $H_6$ für den für die Stoßdämpferfunktion charakteristischen Frequenzbereich von beispielsweise 8 Hz bis 14 Hz ermittelt. Dieser Frequenzbereich ist abhängig vom Fahrzeug und den verwendeten Dämpfern.

Das Feder/Dämpfersystem mit den entsprechenden Befestigungen läßt sich selbstverständlich auch durch die Übertragungsfunktion von einem Ende bis zum anderen Ende des Feder-Dämpfersystems beschreiben. Ändert sich dabei die Dämpfkraft, läßt also beispielsweise die Dämpfkraft nach, so ändert sich auch die Übertragungsfunktion des Systems. Damit läßt sich der Dämpferzustand sehr präzise überwachen.

Ferner läßt sich die Funktion von verstellbaren Stoßdämpfern im Fahrzeug überprüfen. Über das (meist) elektrische Signal des Steuergerätes zur Dämpfkraftverstellung ist der Zeitpunkt bekannt, zu dem das entsprechende Ventil im Dämpfer schalten soll. Ob das Ventil geschaltet hat und ob tatsächlich die Dämpfkraft sich ändert, kann leicht durch Veränderungen in den entsprechenden Übertragungsfunktionen festgestellt werden. Somit lassen sich auf diese Weise auch variable Dämpfersysteme überwachen.

Aus jedem Einzelsignal, beispielsweise Beschleunigungssignal an der Radachse, aber auch am Federbein-Domende, kann darüber hinaus nach der Transformation in den spektralen Bereich unter Berücksichtigung der Fahrzeuggeschwindigkeit und der Reifengröße erkannt werden, ob im Rad, im Reifen oder in der Aufhängung eine Unwucht vorhanden ist. Diese macht sich im Spektrum als scharfe Linie bemerkbar und die Amplitude ist ein Maß für die Größe der Unwucht. Von anderen Linien im Spektrum, die beispielsweise durch Eigenvibration und/oder Störungen hervorgerufen werden, ist sie gut zu unterscheiden, da ihre Frequenz in definierter Weise, d. h. abhängig vom Reifenumfang geschwindigkeitsproportional ist. Durch Auswertung dieser Eigenschaft ist dann auch eine sichere Unwuchtklassifikation möglich.

Bei den vorstehend beschriebenen Anwendungsbeispielen hat sich das Konzept der Zustandsüberwachung einer mechanischen Komponente mit Hilfe der Überwachung einer geeignet gewählten Übertragungsfunktion in der Praxis bereits bestens bewährt.

**Patentansprüche**

1. Verfahren zum Ermitteln und/oder Überwachen des Zustands mindestens einer technischen Komponente eines Kraftfahrzeuges, insbesondere eines Rades (R1, R2) hinsichtlich einer Radunwucht, eines Luftreifens hinsichtlich seines Fülldruckes und/oder eines Stoßdämpfers (D1, D2) hinsichtlich seiner Dämpfungseigenschaften, bei dem die gemäß einer insbesondere durch Fahrbahnunebenheiten erzeugten Schwingungsanregungsfunktion ($u_e$) angeregten Schwingungen ($u_{a1}$) eines mit der technischen Komponente gekoppelten ersten Bauteils, insbesondere einer ersten Radaufhängung gemessen werden,
dadurch gekennzeichnet, daß die Schwingungen ($u_{a2}$) mindestens eines zweiten mit der technischen Komponente gekoppelten Bauteils, insbesondere einer zweiten Radaufhängung gemessen werden, das lediglich unter Berücksichtigung eines etwaigen Funktionszusammenhangs ($H_5$), insbesondere einer Zeitverzögerung mit zumindest nahezu derselben Schwingungsanregungsfunktion ($u_e$) wie das erste Bauteil angeregt wird, daß aus den am ersten Bauteil abgegriffenen Meßwerten eine erste Meßwertfunktion ($u_{a1}$) und aus den am zweiten Bauteil abgegriffenen Meßwerten eine zweite Meßwertfunktion ($u_{a2}$) gebildet wird, daß die beiden Meßwertfunktionen ($u_{a1}$, $u_{a2}$) in den Spektralbereich transformiert werden, daß die die Kopplung zwischen dem ersten und dem zweiten Bauteil wiedergebenden spektralen Kennwerte in Form der Übertragungsfunktion ($H_6$) durch Bildung des Quotienten der beiden in den Spektralbereich transformierten Meßwertfunktionen ($U_{a1}$, $U_{a2}$) bestimmt werden, daß die spektralen Kennwerte in Form der Übertragungsfunktion ($H_6$) mit zuvor in gleicher Weise ermittelten zugeordneten spektralen Kennwerten zur Bestimmung von Abweichungen in dem für die jeweilige technische Komponente (R1, R2, D1, D2) charakteristischen Frequenzbereich (D, R) verglichen werden und daß der Zustand der jeweiligen technischen Komponente (R1, R2, D1, D2) entsprechend dieser Abweichungen ermittelt wird.

2. Verfahren nach Anspruch 1,
dadurch gekennzeichnet, daß zur Ermittlung des Zustands der jeweiligen technischen Komponente der Mittelwert des Betrages der spektralen Kennwerte ($H_6$) im charakteristischen Frequenzbereich ermittelt wird.

3. Verfahren nach einem der vorhergehenden Ansprüche,
dadurch gekennzeichnet, daß die jeweilige Transformation der Meßwertfunktionen ($u_{a1}$, $u_{a2}$) in den Spektralbereich durch eine Integraltransformation erfolgt.

4. Verfahren nach Anspruch 3,
dadurch gekennzeichnet, daß als Integraltransformation eine Fourier-, Laplace- oder Z-Transformation durchgeführt wird.

5. Verfahren nach einem der vorhergehenden Ansprüche,
dadurch gekennzeichnet, daß mehrere spektrale Kennwerte ($H_6$) ermittelt werden, die zur Überprüfung mehrerer unterschiedlicher technischer Komponenten in mehreren unterschiedlichen vorbestimmten Frequenzbereichen, die jeweils für eine der technischen Komponenten charakteristisch sind, auf Abweichungen untersucht werden.

6. Verfahren nach Anspruch 5,
dadurch gekennzeichnet, daß sich den spektralen Kennwerten überlagernde schmalbandige Extrema, die für den Zustand einer bestimmten technischen Komponente charakteristisch sind und deren Frequenzlage mit der Fahrgeschwindigkeit des Kraftfahrzeuges variiert, nach ihrer Erfassung und Korrelation mit der Fahrgeschwindigkeit ausgeblendet werden, bevor die jeweils charakteristischen Frequenzbereiche überprüft werden.

7. Verfahren nach einem der vorhergehenden Ansprüche,
dadurch gekennzeichnet, daß der für die Luftreifen-Fülldruckbestimmung bzw. -überwachung charakteristische Frequenzbereich zwischen 15 Hz und 35 Hz liegt.

EP 0 455 993 B1

**8.** Verfahren nach einem der vorhergehenden Ansprüche,
dadurch gekennzeichnet, daß der für die Stoßdämpferfunktionsbestimmung bzw. -überwachung charakteristische Frequenzbereich zwischen 8 Hz und 14 Hz liegt.

**9.** Verfahren nach einem der vorhergehenden Ansprüche,
dadurch gekennzeichnet, daß aus den Abweichungen in dem vorbestimmten fahrzeugspezifischen Frequenzbereich eine optische und/oder akustische Warnfunktion generiert und zur Anzeige gebracht wird.

**10.** Anwendung des Verfahrens nach einem der Ansprüche 1 bis 9 zur Erfassung des Reifendrucks und/oder der Dämpferkennlinie der Stoßdämpfer und/oder einer Reifen-/Radunwucht und/oder des Zustandes von Federelementen.

**11.** Einrichtung zur Durchführung des Verfahrens nach einem der Ansprüche 1 bis 9,
gekennzeichnet durch mindestens zwei Meßgeber an unterschiedlichen Radaufhängungen sowie eine Datenverarbeitungseinrichtung mit einem die Signalverarbeitung nach vorbestimmten Algorithmen durchführenden Rechner, einem Speicher für zu früheren Zeitpunkten gesammelte Meßwerte bzw. Rechenergebnisse und einer Komparatoreinrichtung zum Vergleichen der aktuellen Meßwerte bzw. Rechenergebnisse mit früheren Meßwerten bzw. Rechenergebnissen.

**Claims**

**1.** A method for establishing and/or monitoring the status of at least one technical component of a motor vehicle, especially the imbalance of a wheel (R1, R2), the inflation pressure of a tyre and/or the damping properties of a shock absorber (D1, D2), wherein the excited vibrations ($u_{a1}$) of a first vehicle component, especially a first wheel suspension, coupled to the technical component are measured according to a vibration excitation function ($u_e$) generated especially by unevenness in the road surface, characterised in that the vibrations ($u_{a2}$) of at least one second vehicle component, especially a second wheel suspension, coupled to the technical component are measured, the said second vehicle component undergoing excitation with at least virtually the same vibration excitation function ($u_e$) as the first vehicle component, taking only any functional relationship ($H_5$), especially a time delay, into consideration, that a first measured value function ($u_{a1}$) is formed from the measured values tapped at the first vehicle component and a second measured value function ($u_{a2}$) is formed from the measured values tapped at the second vehicle component, that the two measured value functions ($u_{a1}$, $u_{a2}$) are transformed into the spectral range, that the spectral characteristics in the form of the transfer function ($H_6$) expressing the coupling between the first and second vehicle components are determined by forming the quotients of the two measured value functions ($u_{a1}$, $u_{a2}$), that the spectral characteristics in the form of the transfer function ($H_6$) are compared with assigned spectral characteristics previously ascertained in the same manner to establish deviations in the characteristic frequency range (D, R) for the particular technical component (R1, R2, D1, D2) and that the status of the particular technical component (R1, R2, D1, D2) is determined according to these deviations.

**2.** A method according to claim 1,
characterised in that the mean value of the spectral characteristic ($H_6$) is established in the characteristic frequency range to determine the status of the particular technical component.

**3.** A method according to either claim 1 or 2,
characterised in that the transformation of the measured value functions ($u_{a1}$, $u_{a2}$) into the spectral range is achieved through an integral transform.

**4.** A method according to claim 3,
characterised in that a Fourier transform, Laplace transform or a Z-transform is carried out as the integral transform.

**5.** A method according to any one of the preceding claims,
characterised in that a plurality of spectral characteristics ($H_6$) are determined and are investigated for deviations to check the status of a plurality of different technical components in a plurality of different pre-determined frequency ranges which are each characteristic for one of the technical components.

10

**6.** A method according to claim 5,
characterised in that the narrow-band extreme values which are superimposed on the spectral characteristics and which are characteristic for the status of a specific technical component and the frequency position of which varies with the speed at which the motor vehicle is being driven, are masked out once they have been acquired and compared to the driving speed before each of the characteristic frequency ranges of interest is checked.

**7.** A method according to any one of the preceding claims,
characterised in that the frequency range characteristic for the tyre inflation pressure determination or monitoring lies between 15 Hz and 35 Hz.

**8.** A method according to any one of the preceding claims,
characterised in that the frequency range characteristic for the determination or monitoring of the shock absorber function lies between 8 Hz and 14 Hz.

**9.** A method according to any one of the preceding claims,
characterised in that an optical and/or acoustic warning function is generated from the deviations in the pre-determined vehicle-specific frequency range and is displayed.

**10.** The use of the method according to any one of claims 1 to 9 to ascertain tyre pressure and/or the damping characteristics of the shock absorbers and/or a wheel/tyre imbalance and/or the status of the spring elements.

**11.** A device for carrying out the method according to any one of claims 1 to 9,
characterised by at least two sensors arranged on different wheel suspensions and a data processing device with a computer carrying out signal processing according to pre-determined algorithms, a storage device for measured values collected at earlier points in time or computing results, and a comparator device to compare the current measured values or computed results with earlier measured values or computed results.

**Revendications**

**1.** Procédé pour établir et contrôler l'état d'au moins un composant technique d'un véhicule à moteur, en particulier d'une roue (R1, R2) en ce qui concerne un défaut d'équilibrage de cette roue, d'un pneu en ce qui concerne sa pression de gonflage et/ou d'un amortisseur (D1, D2) en ce qui concerne ses propriétés d'amortissement, cas dans lequel on mesure les vibrations ($U_{a1}$) d'une première pièce constitutive couplée à un composant technique, en particulier d'une première suspension de roue, vibrations produites selon en particulier une fonction de production de vibrations ($U_e$) causées par les inégalités de la chaussée, en particulier d'une première suspension de roue, procédé caractérisé en ce qu'on mesure les oscillations ($U_{a2}$) d'au moins une seconde pièce constitutive couplée au composant technique, en particulier d'une seconde suspension de roue, pièce constitutive que l'on actionne uniquement en prenant en considération une relation fonctionnelle éventuelle ($H_5$), en particulier une temporisation avec au moins presque la même fonction ($U_e$) de production de vibrations que la première pièce constitutive, en ce qu'à partir des valeurs de mesure détectées sur la première pièce constitutive on forme une première fonction de valeur de mesure ($U_{a1}$) et à partir des valeurs de mesure détectées sur la deuxième pièce constitutive on forme une deuxième fonction de valeur de mesure, ($U_{a2}$) en ce que les deux fonctions de valeur de mesure ($U_{a1}$, $U_{a2}$), sont transformées dans la zone spectrale, en ce que les valeurs caractéristiques spectrales reproduisant le couplage entre la première et la seconde pièce constitutive sont déterminées sous la forme de la fonction de transfert ($H_6$) en formant le quotient des deux fonctions de valeurs de mesure ($U_{a1}$, $U_{a2}$) transformées dans la zone spectrale, en ce que l'on compare les valeurs caractéristiques spectrales, sous la forme de la fonction de transfert ($H_6$), à des valeurs caractéristiques spectrales correspondantes pour déterminer des écarts dans la plage de fréquence (D, R) caractéristique pour les composants techniques correspondants (R1, R2, D1, D2) et en ce que l'on détermine l'état du composant technique correspondant (R1, R2, D1, D2) en fonction de ces écarts.

**2.** Procédé selon la revendication 1, caractérisé en ce que pour établir l'état du composant technique correspondant, on détermine la valeur moyenne du montant de la valeur caractéristique spectrale ($H_6$)

dans la plage de fréquence caractéristique.

3. Procédé selon l'une des revendications précédentes, caractérisé en ce que la transformation respective des fonctions de valeur de mesure ($U_{a1}$, $U_{a2}$) a lieu dans la plage spectrale par une transformation par intégration.

4. Procédé selon la revendication 3, caractérisé en ce que l'on réalise comme transformation par intégration une transformation de Fourier, une transformation de Laplace ou une transformation Z.

5. Procédé selon l'une des revendications précédentes, caractérisé en ce que l'on détermine plusieurs valeurs caractéristiques spectrales ($H_6$), dont on recherche les écarts pour contrôler plusieurs composants techniques différents dans plusieurs plages de fréquence prédéterminées différentes, qui sont respectivement caractéristiques de l'un des composants techniques.

6. Procédé selon la revendication 5, caractérisé en ce que l'on extrait les extrêmes à bande étroite qui se superposent aux valeurs caractéristiques spectrales, qui sont caractéristiques de l'état d'un composant technique déterminé et dont la position de fréquence varie avec la vitesse du véhicule à moteur après leur détections et une corrélation avec la vitesse du véhicule, avant de contrôler les plages de fréquence respectivement caractéristiques.

7. Procédé selon l'une des revendications précédentes, caractérisé en ce que la plage de fréquence caractéristique pour déterminer la pression de gonflage des pneus ou contrôler cette pression, se trouve comprise entre 15 Hz et 35 Hz.

8. Procédé selon l'une des revendications précédentes, caractérisé en ce que la plage de fréquence caractéristique pour la détermination ou le contrôle du fonctionnement des amortisseurs, est comprise entre 8 Hz et 14 Hz.

9. Procédé selon l'une des revendications précédentes, caractérisé en ce que l'on génère, à partir des écarts dans la plage de fréquence prédéterminée spécifique du véhicule une fonction optique et/ou acoustique d'avertissement, et en ce qu'on procède à son affichage.

10. Mise en oeuvre du procédé selon l'une des revendications 1 à 9 pour détecter la pression des pneus et/ou la courbe caractéristique des amortisseurs et/ou un déséquilibre des pneus ou des roues, et/ou l'état des éléments à ressort.

11. Dispositif pour la mise en oeuvre du procédé selon l'une des revendications 1 à 9, caractérisé par au moins deux capteurs de mesure sur des suspensions de roues différentes ainsi que par un dispositif de retraitement de données par un ordinateur exécutant le retraitement des signaux selon des algorithmes prédéterminés, une mémoire pour des valeurs de mesure ou des résultats de calcul rassemblés à des instants antérieurs, et un dispositif de comparaison servant à comparer les valeurs de mesure ou les résultats de calcul actuels aux valeurs de mesure ou aux résultats de calcul antérieurs.

FIG. 1

EP 0 455 993 B1

Fig.2

Fig.3

Fig. 4

Fig. 5

Mittelwert der Übertragungsfunktion im Bereich
15 Hz bis 35 Hz

Reifenluftdruck in bar

Fig. 6

17